Europäisches Patentamt

European Patent Office

Office européen des brevets

(11) Publication number: **0 422 672 A1**

## EUROPEAN PATENT APPLICATION

(21) Application number: 90119609.7

(51) Int. Cl.⁵: **H04N 5/21**

(22) Date of filing: **12.10.90**

(30) Priority: **12.10.89 JP 263960/89**

(43) Date of publication of application:
**17.04.91 Bulletin 91/16**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

Applicant: **TOSHIBA AUDIO VIDEO**
**ENGINEERING CO., LTD.**
**3-3-9, Shinbashi Minato-ku**
**Tokyo(JP)**

(72) Inventor: **Okada, Teruo, c/o Intell. Property**
**Division**
**K. K. Toshiba, 1-1 Shibaura 1-chome**
**Minato-ku, Tokyo 105(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Video signal noise reduction circuit.**

(57) A first and a second video amplifiers (1, 4) of gain variable type are probided in the present invention. If it is defined that an output level the video signal is A, and input number (frame or field number) of the video pictures from the input starting time of the video signal is n , the gains (G1, G2) of the first and second video amplifiers (1, 4) are adjusted to A/n and (n - 1)A/n, respectively, for every video picture input. As a result, the output signal level can always be kept at a predetermined level, and the ideal noise reduction can be performed, since all signals added to every video picture input in the adder (2) are at the same level.

EP 0 422 672 A1

FIG. 3

## VIDEO SIGNAL NOISE REDUCTION CIRCUIT

The present invention relates to a video signal noise reduction circuit for use in a video tape recorder (VTR) and the like, and, more particularly, to a video signal noise reduction circuit for reducing a noise component in video signals subjected to frame of field correlation, or in still picture signals.

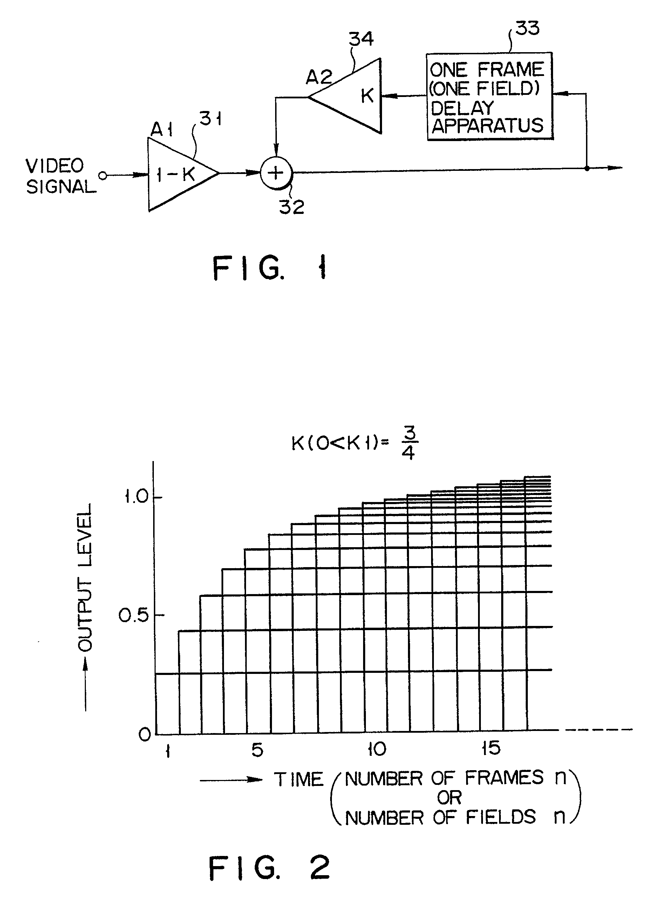

A cyclic type digital filter, for example, has been used as a noise reduction circuit for video signal. Fig. 1 illustrates this digital filter. As is shown in Fig. 1, a video signal input is amplified by a first video amplifier 31 and supplied to one imput terminal of an adder 32. An output signal of the adder 32 is supplied as a video signal to another circuit. A part of the output signal is branched away and input to a one-frame or one-field delay apparatus 33. An output signal from the delay apparatus 33 is amplified by a second video amplifier 34 and fed back to the other input terminal of the adder 32.

When a video signal subjected to frame or field correlation is given or a still picture signal is input to the noise reduction circuit, the magnitude of an output response signal will increase stepwise with time i.e., number of input frames or fields to reach the input signal level, as is shown in Fig. 2. Let us assume that the gain A1 of the first video amplifier 31 is (1 - K) and the gain A2 of the second video amplifier 34 is K, where K is cyclic coeffient (0 < K < 1). The energy No of the noise component included in the output signal is then expressed as

$$\lim_{n \to \infty} No = N \sqrt{(1 - K)/(1 + K)} \qquad \cdots (1)$$

where n (natural number) is a number of frames or fields of the video signal with the lapse of time, and N is energy of the noise component included in the input noise signal. It is well known that the energy No is down to (1 - K)/(1 + K) times.

However, the conventional video signal noise reduction circuit described above is disadvantageous in the following three respects:

(1) The output signal is slow to reach the same level as the input signal level in the output response characteristic, as shown in Fig. 2. If the cyclic coefficient K is increased in order to improve noise reduction effect for video signal, the return to such level will be delayed correspondingly. Therefore, means for supplementing the delay time must be needed in the conventional circuit.

(2) Since the video signals from the amplifier 31 and the amplifier 34 are not added at a ratio 1 : 1 for each frame or field in the adder 32, it is impossible to achieve the ideal noise reduction. In other words, since K = 1, the noise can not be reduced to zero in theory, as can be understood from the equation (1).

(3) In case number of frames of fields of the video signals which are correlated is small, the signal level to be processed will be low when the cyclic coefficient K is set to be large. For example, when K = 0.9, the gain A1 of the first video amplifier 31 will be 0.1. As a result, the video signal will be compressed and therefore omission of the information and deterioration of the signal-to-noise ratio S/N will occur.

Therefore, it is an object of the present invention to provide a noise reduction circuit for video signal, in which the output signal level can be kept always at a predetermined level, ideal noise reduction can be performed, and neither omission of the information nor deterioration of the signal-to-noise ratio S/N occur even when number of frames or fields of the video signals which are correlated is small.

According to the invention, there is provided a noise reduction circuit for video signal, which comprises: first video signal amplifying means of gain variable type for receiving the video signal; adding means for receiving an output signal from the first video signal amplifying means as one input signal thereof; one-picture delaying means for receiving a signal branched from an output signal of the adding means and outputting an output signal delayed by picture; second video signal amplifying means of gain variable type for receiving the delayed output signal from the one-picture delaying means and supplying an output signal to the adding means as the other imput signal thereof; and gain control means for controlling a gain of the first video signal amplifying means to A/n, and a gain of the second video signal amplifying means to (n - 1)A/n for every video picture input, corresponding to an output level A of the video signal and the number of n of the video pictures input from the input starting time of the video signal.

In the noise reduction circuit of the present invention, the output signal level can be kept always at the predetermined level, and the ideal noise reduction can be performed. This is because all signal levels added at every input picture of the video pictures in the adder can be made equal.

This invention can be more fully understood from the following detailed description when taken in

2

conjunction with the accompanying drawings, in which:

Fig. 1 is a block diagram showing a conventional noise reduction circuit for video signal;

Fig. 2 is a diagram illustrating the output response characteristic of the noise reduction circuit shown in Fig. 1;

Fig. 3 is a block diagram showing an embodiment of the noise reduction circuit according to the present invention; and

Fig. 4 is a diagram illustrating the output response characteristic of the noise reduction circuit for video signal shown in Fig. 3.

An embodiment of the present invention will be described hereinafter with reference to the accompanying drawings.

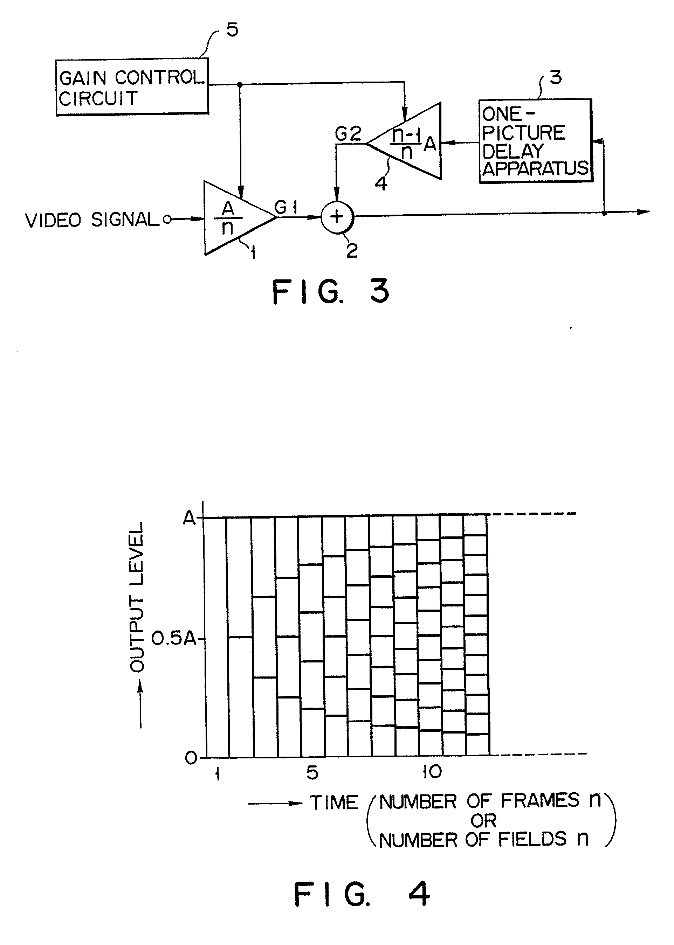

Fig. 3 is a block diagram showing an embodiment of a noise reduction circuit according to the present invention. This is a cyclic-type noise reduction circuit for reducing a noise component in the still picture signal or the video signal which is subjected to frame or field correlation in the VTR. As is shown in Fig. 3, the noise reduction circuit comprises a first video amplifier 1 for amplifying an input video signal, an adder 2 to which an output signal of the first video amplifier 1 is input as one input signal thereof, a one-picture (one-frame or one-field) delay apparatus 3 to which a part of an output signal (output video signal) of the adder 2 is input, a second video amplifier 4 for amplifying the delayed video signal supplied from the one-picture delay apparatus 3 and for supplying an output signal to the other input terminal of the adder 2, and a gain control circuit 5. The first video amplifier 1 and the second video amplifier 4 are composed of a gain variable type amplifier each. The gain control circuit 5 adjusts a gain G1 of the first video amplifier 1 to A/n, and a gain G2 of the second video amplifier 4 to $(n - 1)A/n$, for every video picture input, i.e., every frame or field input of the video pictures, when an output level of the video signal is set to A (constant number), and an input frame or field number of the video pictures from the input starting time of the video signal is set to $\underline{n}$.

The operation of the noise reduction circuit for video signal of the present invention will now be described, with reference to Fig. 4 representing the output response characteristic of the circuit.

When the still picture signal or the video signal which is subjected to frame or field correlation is input to the noise reduction circuit of the present invention, the gain G1 of the first video amplifier 1 is A, and the gain G2 of th second video amplifier 4 is 0 for the first input video signal (n = 1). The adder 2 does not perform addition on an output signal of the first video amplifier 1. Therefore, the signal of level A (A = A + 0) is output, and a part of the signal is input to the one-picture delay apparatus 3. Then, both gains G1 and G2 become A/2 for the succeeding frame or field input signal (n = 2) under the control of the gain control circuit 5. The adder 2 adds an output signal of the second video amplifier 4 to the output signal of the first video amplifier 1, generating an output signal of the level A (i.e., the sum of A/2 and A/2)/ This signal is input to the one-picture delay apparatus 3. Thereafter, the video signals are processed cyclically by the same procedures as described above. Output responses with the lapse of time (input frame number or input field number) are shown in Fig. 4. In this case, an output level is given as follows and is kept constant.

$$G1 + G2 = (A/n) + (n - 1)A/n = a \qquad (2)$$

After the n-th video signal picture has been input, the energy No of the noise component included in the output signal is defined by

$$No = \sqrt{(N1/n)^2 + (N2/n)^2 + \cdots\cdots + (Nn/n)^2}$$

$$= N/\sqrt{n} \qquad (3)$$

where N = energy of the noise component included in the video picture input (N can be always kept constant).

No = energy of the noise component included in the output signal after the n-th video picture is input. (In the equation (3), intermediate calculations are omitted). Therefore, the energy No of the noise component which is included in the output signal at the time when number $n \rightarrow \infty$ is given as the above equation (1) in the prior art.

$$\lim_{n \to \infty} No = N \sqrt{(1-K)/(1 + K)} \qquad (0 < K < 1)$$

On the other hand, the energy No of the noise component in the above embodiment according to the present invention can be expressed as:

$$\lim_{n \to \infty} No = 0 \qquad \qquad \cdots (4)$$

In the prior art, when number of frames of fields of the video signals which are correlated is small, the signal level is reduced. Therefore, the signal is compressed if the cyclic coefficient K is set to be large. As a result, the information is omitted, and the signal-to-noise ratio S/N is deteriorated. In the above embodiment of the present invention, addition can be performed at a high level even when number of frames or fields of the video signals which are correlated is small.

As described above, the present invention can provide a noise reduction circuit in which the output signal level can always be kept at a predetermined level, and the ideal noise reduction can be performed, since all signal levels which are added to every video picture input can be made equal. Further, neither omission of the information nor deterioration of the signal-to-noise ratio S/N occur even when number of frames or fields of the video signals is small.

Reference signs in the claims are intended for better understanding and shall not limit the scope.

## Claims

1. A noise reduction circuit for video signal, which comprises:
first video amplifying means (1) of gain variable type for receiving the video signal;
adding means (2) for receiving an output signal from said first video amplifying means (1) as one input signal thereof;
one-picture delaying means (3) for receiving a signal branched from an output signal of the adding means (2) and outputting an output signal delayed by one picture;
second video amplifying means (4) of gain variable type for receiving the delayed output signal from said one-picture delaying means (3) and supplying an output signal to said adding means (2) as the other input signal thereof; and
gain control means (5) for adjusting a gain of said first video amplifying means (1) to A/n, and a gain of second video amplifying means (14) to (n - 1)A/n, for every video picture input, corresponding to an output level A of the video signal and input number $\underline{n}$ of said video pictures from the input starting time of the video signal.

2. The noise reduction circuit according to claim 1, characterized in that said input number of said video pictures is frame number of said video signals.

3. The noise reduction circuit according to claim 1, characterized in that said input number of said video pictures is field number of said video signals.

EP 0 422 672 A1

FIG. 1

$$K(0<K1)= \frac{3}{4}$$

FIG. 2

5

FIG. 3

FIG. 4

6

European
Patent Office

**EUROPEAN SEARCH
REPORT**

Application Number

**EP 90 11 9609**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 122 050 (PHILIPS)<br>* Claims 1,3; figures 1,2,3 *<br>– – – | 1-3 | H 04 N<br>5/21 |
| X | US-A-4 064 530 (KAISER)<br>* Column 11, line 7 - column 12, line 62; figure 5 *<br>– – – – – | 1-3 | |

| | TECHNICAL FIELDS SEARCHED (Int. Cl.5) |
|---|---|
| | H 04 N |

The present search report has been drawn up for all claims

| Place of search | Date of completion of search | Examiner |
|---|---|---|
| The Hague | 17 January 91 | YVONNET J.W. |